# EUROPEAN PATENT APPLICATION

(11) **EP 2 551 610 A1**
(43) Date of publication of application: **30.01.2013**
(21) Application number: 12178164.5
(22) Date of filing: 27.07.2012
(51) Int. Cl.: F24J 2/46, B08B 1/04, E04G 23/00, E04G 3/28, E04G 3/22

(54) **Photovoltaic and solar panels cleaning machine**

(30) Priority: 27.07.2011 IT VI20110206
(71) Applicant: Piccoli, Alberto, 36035 Marano Vicentino (Vicenza) (IT)
(72) Inventor: Piccoli, Alberto, 36035 MARANO VICENTINO (VICENZA) (IT); Piccoli, Andrea, 36035 MARANO VICENTINO (VICENZA) (IT)
(74) Representative: Burchielli, Riccardo

(57) **Abstract**

A machine for the cleaning of solar panels (14) comprising two chassis guide member (10, 11), connected to a surface (12) on which are installed the modules (13) of the photovoltaic panel and solar (14) to be cleaned; to frames guide (10, 11), positioned in correspondence with parallel sides and opposite the photovoltaic panel and solar (14), are also slidably constrained two additional frames (16), perpendicular to the aforesaid frames guide (10, 11) and operable in translation, which is slidably connected to a platform (20), which bears a support structure (27, 29), adapted to the flow rate of one or two operators (24) and to which is pivoted a brush or cleaning roller (30).

## Description

The present invention relates generally to a machine able to clean photovoltaic and solar panels.

More particularly, the invention relates to an electric cleaning machine for solar panels, which is equipped with a platform that is displaceable, both horizontally and vertically, over the whole surface of the solar panel and that can also be used as a support for a user to perform maintenance and/or repairing operations on both the damaged modules of the solar panel and the same machine.

The term solar panel (or collector) means different solar energy transforming systems, such as the thermal solar panel, which uses the sun's energy to heat water or another fluid usually to heat the house or the house water, the photovoltaic solar panel that uses solar cells to convert the sun's energy (electromagnetic radiation) into electricity, thanks to the photovoltaic effect, the hybrid solar panel, according to which a thermal solar panel is coupled with a solar photovoltaic panel, and the thermodynamic solar system, which is a technology adapted to utilize solar energy for heating a fluid and to accumulate energy for moving a turbine and for generating electrical energy.

In particular, photovoltaic solar panels, which are generally formed by a series of photovoltaic modules that are mounted on supports handled for a solar tracking, are devices able to convert the solar energy directly into electricity by means of the photovoltaic effect and are normally used as power generators in a photovoltaic system.

Each photovoltaic module is constituted by a thin semiconductor layer (photovoltaic cell) that is placed between two special glasses or between a glass layer and a plastic layer (EVA), which is put under vacuum and which is usually inserted in an aluminum frame, which gives the module the necessary stiffness; in addition, on the back of the module there are two cables with their pins, which provide DC energy.

Known photovoltaic modules on the market have a power varying between 50 and 300 Watt, according to the different technologies and the size of the same panels; moreover, the surface which is necessary for delivering a power of 1 kW is usually in the range between 7 and 20 m², depending on the type of the system and of the modules, as well as on the shading of said modules during the day.

As all outdoors devices, even the solar panels are exposed to a variety of waste, such as dead insects, leaves, mosses, resins, smog, dust and sand, which get dirty the surface, as well as the weather conditions, including wind, rain and snow.

This accumulation of dirt affects the performance of the solar panels, thus greatly reducing the efficiency; the photovoltaic systems, in fact, suffer, throughout their life cycle, a performance degradation with loss of energy from 5% to 25% and very often these energy losses are caused by dirt which accumulates on the panel modules.

Therefore, in order to avoid any loss of efficiency and ensure smooth operation, as well as to obtain the expected economic advantage, it is necessary to maintain constantly clean the panels glasses, by planning periodical cleaning actions.

Such actions are still carried out by means of portable washing machines, that produce, through suitable filtering systems, pure water, which is sent on the panel surface by means of long telescopic rods, which have at their ends one or more brushes.

It is thus possible to clean the panel surface directly from the ground, quickly and without any risk of breakage of each photovoltaic module. However, said known cleaning machines do not allow the operator to perform a simultaneous maintenance of the photovoltaic panel, since said machines exclusively work from the ground.

In addition, said known machines do not allow to use detergents for the panels cleaning and they have a small height of the brush, which gives serious drawbacks especially in the case where it is necessary to perform the cleaning of a slope (when panels are installed on roofs of houses, buildings, etc.).

In view of the above requirements, therefore, an object of the present invention is to obviate the above mentioned prior art drawbacks and, in particular, an object of the invention is to indicate a machine for cleaning photovoltaic and solar panels, which is able to perform both a complete cleaning of the panels and a simultaneous maintenance of the photovoltaic system, also with a possible replacement of the photovoltaic modules which are damaged.

Another object of the present invention is to provide a machine for cleaning photovoltaic and solar panels, which is able to work both during daytime and in the night, so that the panels are not overshadowed during the day, thus increasing the energy efficiency and the earnings of the energy bill.

A further object of the invention is to indicate a machine for cleaning solar panels, which is extremely reliable, effective and efficient, as well as simple to manufacture and extremely advantageous since it is convenient, comfortable and it has a high energy yield.

The above mentioned and other objects are achieved, according to the present invention, by a machine for cleaning photovoltaic and solar panels according to the enclosed claim 1; other technical features of the machine are disclosed in the dependent claims.

Advantageously, the machine according to the invention provides for an automatic movement of a brush, both horizontally and vertically, with respect to the photovoltaic and solar panel to be treated, so as to be able to dispense water and detergent at different times and to obtain an efficient degreasing action of the detergent, as well as an effective rinsing operation.

Furthermore, the cleaning machine of the invention allows to considerably reduce times for cleaning and for the maintenance of the photovoltaic and solar panel, while maintaining the safety conditions necessary for performing said operations.

These and other objects and advantages will appear to a greater extent from the following description, which relates to a preferred embodiment of the machine for cleaning photovoltaic and solar panels, according to the present invention, and from the enclosed drawings, in which:
- figure 1 shows a first perspective view of a machine for cleaning solar panels which is directly installed over a photovoltaic and solar panel, according to the present invention;
- figure 2 shows a second perspective view of the machine for cleaning photovoltaic and solar panels of figure 1, according to the invention;
- figure 3 shows a partial plan view of the machine for cleaning photovoltaic and solar panels of figure 1, according to the invention;
- figure 4 shows a perspective partial and enlarged view of a technical detail of the machine for cleaning photovoltaic and solar panels of figure 1, according to the present invention.

Referring to the above mentioned drawings, the photovoltaic and solar panels cleaning machine, according to the present invention, comprises two racks or guide frames 10, 11, which are fixed and/or supported and/or connected, possibly by means of brackets or support feet 15, to the surface 12 (which is constituted, for example, by the slope of a roof), on which the modules 13 of a photovoltaic and solar panel 14 are installed, said guide frames being provided respectively at two opposite and parallel sides of the photovoltaic and solar panel 14.

The guide frames 10, 11 are also slidably connected with two additional frames or racks 16, which are perpendicular to the frames 10, 11 and which can be translated according to the direction and the versus of the arrows F, simultaneously and synchronously, by means of the drive motor 21 and the relative geared motor.

The toothed belt or chain 17, which is placed on the frame 10, and the toothed belt or chain 18, which is placed over one of the frames 16, are used for housing electrical cables and pipelines.

The geared motor which is connected to the motor 21 and, therefore, the motion of the two frames 16 is further synchronized, through the drive 19, to the motion of the platform 20, which is driven by the motor 22 and the relative geared motor and which is placed between the frames 16; the platform 20 is thus slidable, through the pulleys 33 interacting on the relative profiles 34, in a direction perpendicular to the direction of displacement of the frames 16 and according to the versus of the arrows G.

The platform 20 has typically a width which is substantially equal to the width of each module 13 of the solar panel 14.

The machine according to the invention can be electrically connected to the power supply at 230 Volts AC, or it can be provided for a version with a power supply of 24 Volts DC, with rechargeable batteries that are placed in a protective container 28; the batteries are rechargeable by means of a photovoltaic system 23 which is installed on the machine and, in particular, on at least one of the frames 10, 11.

In addition, the surface and the structure of the platform 20 are able to support one or two operators 24, which therefore can work safely above the photovoltaic and solar panel 14, even when it is necessary to replace one or more solar modules 13 that are damaged.

In view of the above, at least one of the frames 16 is fixed to a ladder side 26, which allows operators to go up and down from the platform 20.

The platform 20 is further equipped with an anti-fall protection 25 for said operators 24 and with a control panel, available for the operators in order to manually actuate the displacement of the frames 16 and therefore of the same platform 20.

Finally, said platform 20 is also provided for performing maintenance and/or repairing operations to the cleaning machine itself.

Therefore, the whole cleaning machine is movable both horizontally and vertically with respect to the photovoltaic and solar panel 14 and said machine substantially works as follows.

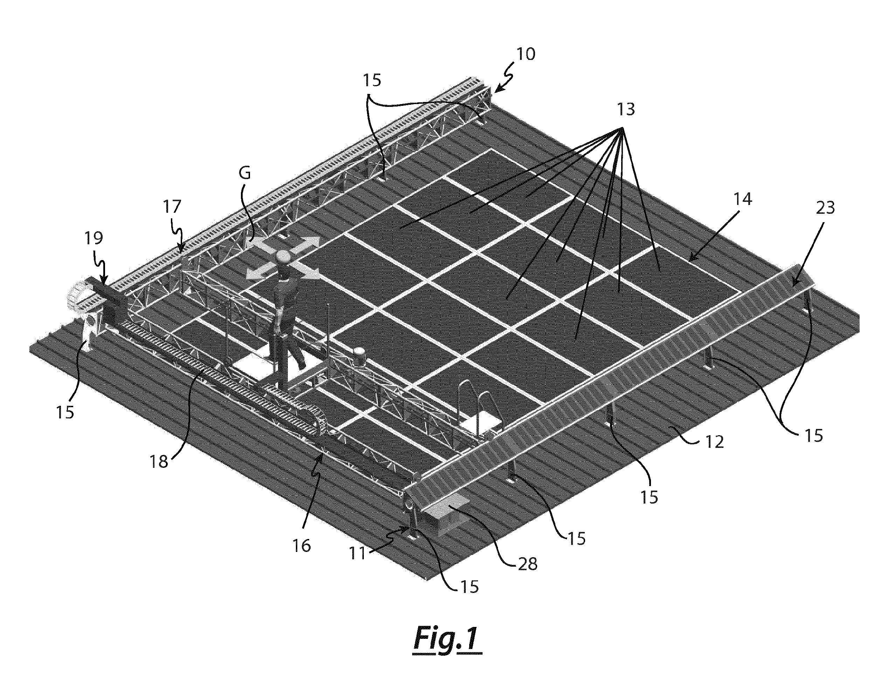

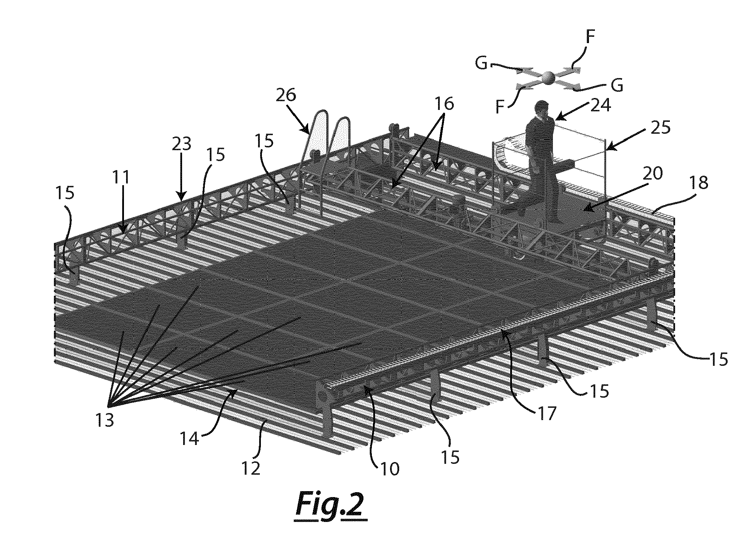

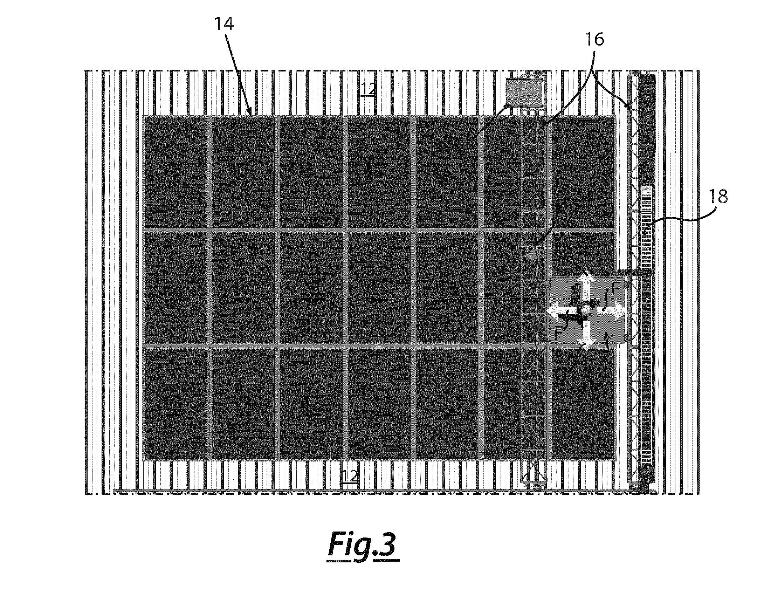

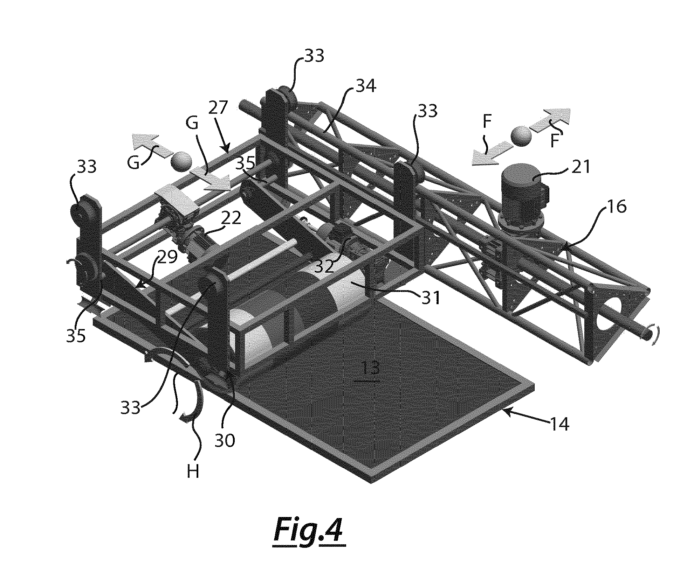

Starting from an initial position, according to which the frames 16 are kept fixed in correspondence of one of the sides of the solar panel 14 (the position is shown in the enclosed figures 1-3), the platform 20, supported by the frame 27 (shown in detail in the enclosed figure 4), is moved back and forth (according to the direction of the arrows G) by the motor 22.

In particular, a U-shaped support 29 is pivoted to the frame 27 and said support 29 has a brush or cleaning roller 30, which is covered by a protection device 31 against the spread of splashing water and dirt in general and which is moved in rotation (according to the arrows H of figure 4), by means of the drive motor 32, directly onto the module 13 of the photovoltaic and solar panel 14.

Therefore, during the movement of the frame or carriage 27 supporting the platform 20 along the direction G, and, in particular, during the movement of said frame 27 starting from the frame 11 until reaching the frame 10 or vice-versa, the cleaning brush 30 is raised with respect to the surface of the module 13 of the solar panel 14 (thanks to the pistons 35, which provide for an upward rotation of the arms of support 29) and, through a suitable conveying system, a suitable amount of detergent is delivered on all modules 13 which are arranged in a row over the solar panel 14.

In this way, time is sufficient for the degreasing action of detergents, because said detergent is removed by a water flushing; the water flows from appropriate nozzles on the same row of the modules 13 that are cleaned with said detergent.

In particular, the above rinsing operation takes place with a simultaneous mechanical cleaning action by means of the brush 30 (which is driven down so as to contact the modules 13 surface), during the movement of the platform 20 between the frames 16 in the opposite versus with respect to the previous one.

The cleaning operation can be completed over the whole photovoltaic and solar panel 14 simply by moving the frames 16 along the direction F so as to perform, for each translation of the frames 16, an action of dispensing detergent and a rinsing action together with a simultaneous cleaning performed by the brush 30 for each row of modules 13 of the solar panel 14.

The movements of the platform 20 and frames 16 respectively along the directions F and G may be programmed by means of control units managed by a suitable software, as well as it is also possible to perform the above operations with manual controls that can be available to operators 24 and placed directly on the platform 20 in a position facing the protection device 25.

It was thus verified, as described, that the cleaning machine according to the invention allows to greatly reduce the time for a suitable cleaning and a proper maintenance, in complete safety, of the photovoltaic and solar panels.

Moreover, thanks to the use of said machine, there are no limitations neither on the type of power supply (mains supply or rechargeable batteries) nor on the surfaces where the solar panels are installed; in particular, there are no limitations to the height of the slope surface to be cleaned when the photovoltaic and solar panels are installed on the roof of a house or a building in general.

Finally, the machine according to the invention, unlike the known cleaning systems, can also work during the night, thus avoiding to obscure the modules of the solar panel during the day, thus increasing the gain of the energy account for a user.

From the above description it is therefore observed that the technical characteristics of the cleaning machine for photovoltaic and solar panels, which is the object of the present invention, give many, important and evident advantages, such as those that are previously mentioned.

Finally, it is also clear that many variations may be made to the cleaning machine of the invention, without departing from the principles of novelty inherent in the inventive idea, as well as it is clear that, in the practical embodiment of the invention, the materials, shapes and dimensions of the illustrated details may be any according to the requirements and said details may be replaced with other technically equivalent.

## Claims

1. A photovoltaic and solar panels (14) cleaning machine **characterized in that** it comprises at least two first guide frames (10, 11), connected to at least one surface (12) on which cells of at least one solar panel (14) to be cleaned are installed (13), said first guide frames (10, 11) being placed at sides parallel and opposite to said solar panel (14) and at least two translating frames (16), perpendicular to said first guide frames (10, 11), being also linked in a sliding way to said first guide frames (10, 11), at least one platform (20), having a support structure (27, 29) on which at least one operator (24) stands and to which at least one cleaning brush or roller (30) is pivoted, being also connected in a sliding way to said translating frames (16).

2. Machine as claimed in claim 1, **characterized in that** said two translating frames (16) slide simultaneously and synchronously with each other, according to at least one first shifting direction (F), which is perpendicular to the sliding direction (G) of said platform (20).

3. Machine as claimed in at least one of the previous claims, **characterized in that** said two translating frames (16) are powered by motors (21), associated with relative adapters, whose motion is synchronized with the motion of additional motors (22), associated with respective adapters, which are able to drive said platform (20).

4. Machine as claimed in at least one of the previous claims, **characterized in that** said machine is electrically powered from the mains or from batteries, said batteries being rechargeable through a photovoltaic plant (23) which is installed on the machine.

5. Machine as claimed in at least one of the previous claims, **characterized in that** at least one ladder (26), enabling operators (24) to go up and/or get off the platform (20), is fixed to said two translating frames (16).

6. Machine as claimed in at least one of the previous claims, **characterized in that** said platform (20) is equipped with an operators (24) anti-fall protection (25) and with a control panel for manually controlling and operating the driving of said two translating frames (16) and of said platform (20).

7. Machine as claimed in at least one of the previous claims, **characterized in that** said cleaning brush or roller (30) is covered by at least one protective element (31) against the spread of splashing water and dirt in general.

8. Machine as claimed in at least one of the previous claims, **characterized in that** said cleaning brush or roller (30) rotates (H) and directly acts on a plurality of cells (13) of said solar panel (14) at the same time of water supplying, during at least one shifting of the platform (20) between said two first guide frames (10, 11).

9. Machine as claimed in at least one of the previous claims, **characterized in that** said cleaning brush or roller (30) is raised above the solar panel (14) and an appropriate amount of detergent is poured on a plurality of cells (13) of the solar panel (14), during at least one shifting of the platform (20) between said two first guide frames (10, 11).
